# EUROPEAN PATENT SPECIFICATION

(11) **EP 1 112 389 B1**
(45) Date of publication and mention of the grant of the patent: **15.03.2006**
(21) Application number: 98941150.9
(22) Date of filing: 04.09.1998
(51) Int. Cl.: C22B 11/00, C22B 3/42, C22B 3/40, B01D 11/04, B01J 39/18, B01J 39/04

(54) **PROCESS FOR RECOVERY OF GOLD AND/OR SILVER**
VERFAHREN ZUR GEWINNUNG VON GOLD UND/ODER SILBER
PROCEDE SERVANT A RECUPERER DE L'OR OU DE L'ARGENT

(43) Date of publication of application: 04.07.2001
(73) Proprietor: Oretek Limited, Albury, New South Wales 2640 (AU)
(72) Inventor: JAY, William, Harold, Doncaster, VIC 3108 (AU)
(74) Representative: Jones, Helen M.M.
(86) International application number: PCT/AU1998/000722
(87) International publication number: WO 1999/013116

(56) References cited:
- WO-A-88/04696
- WO-A-94/00237
- WO-A-95/18159
- WO-A-96/28251
- WO-A-97/49474
- ZHAO JIN ET AL: "Extraction of gold from thiosulfate solutions using amine mixed with neutral donor reagents" HYDROMETALLURGY;HYDROMETALLURGY APR 1998 ELSEVIER SCI B.V., AMSTERDAM, NETHERLANDS, vol. 48, no. 2, April 1998 (1998-04), pages 133-144, XP004127905

## Description

The present invention relates to a process for recovery of gold and/or silver thiosulphate from solutions and slurries and also to the use of ion exchange materials for conducting gold and/or silver thiosulphate recovery.

Hydrometallurgical extraction of precious metals is commonly performed using oxygenated alkaline cyanide-containing solutions, and in particular, by the use of sodium cyanide. Because cyanide solutions are highly toxic and can cause environmental problems, the use of this lixiviant is falling into disfavour. Destruction of residual cyanide by processes such as the Inco SO₂/Air process can destroy the cyanide in tailings waters, but this represents an additional financial cost to the mining operation. Furthermore, this process does not destroy toxic thiocyanates which are generated by the cyanide ion reacting with sulphide minerals when these minerals are present in the ore.

In many gold-containing ores, the gold can be intimately associated with sulphidic minerals such as pyrite, pyrrhotite, arsenopyrite, marcasite, chalcopyrite, chalcocite, bornite, enargite, etc. The gold present in association with these sulphide minerals often cannot be economically recovered using cyanide without the ore being given a pretreatment such as roasting, pressure oxidation or bacterial oxidation.

Copper, either as native copper or copper-based minerals or manganese when present in ores leads to high reagent usage, generally poor gold recovery, and the possible discharge of stable, highly toxic copper cyanide species into tailings dams. This high reagent usage can lead to the gold recovery being uneconomic. Furthermore, the presence of copper cyanide in the tailings discharge has led to significant bird-kills and to the banning of gold mining in areas close to bird habitats.

Furthermore, carbonaceous matter can also be present in gold-containing ores and its presence during a carbon-in-pulp (CIP) or carbon-in-leach (CIL) cyanidation-recovery process can lead to the loss of gold due to preg robbing. Preg robbing may be simply described as the adsorption of gold cyanide onto the surface of any material the particle size of which is smaller than the screen size used to recover the gold cyanide-loaded activated carbon from the CIP/CIL circuit. Thus, the preg robbed gold is not recovered from the circuit and is lost to tailings. The complex carbonaceous materials may comprise long-chain hydrocarbons and organic acids, such as humic acids. They have been reported to vary in both their physical and chemical forms and to vary from one ore body to the next. Many procedures have been proposed to treat the carbonaceous material to minimise gold cyanide losses. Processes such as the addition of a blanking agent such as kerosene or sodium lauryl sulphate as a pretreatment; acidic or alkaline pressure oxidation; roasting (including roasting of the entire ore body); removal of the carbonaceous matter by flotation; chemical oxidation as taught by Clough et al. in U.S. Patent 4,801,329 and including aqueous chlorination and nitric acid oxidation; and bacterial oxidation as suggested by Brierley et al . in U.S. Patent 5,127,942 have been adopted or researched by industry.

A number of other lixiviants for gold such as halides (chlorine, bromine and iodine), thiourea, nitriles (malononitrile, lactonitrile), thiocyanates, ammonia, sodium polysulphide and sodium sulphite have been proposed for the treatment of these ores. Other than chlorine, little commercial use has been made of these alternative lixiviants.

In U.S. Patent 4,070,182, Genik-Sas-Berezowsky et al. describes a process whereby gold could be recovered from copper-containing ores by the use of an oxygenated ammonium thiosulphate solution in the presence of ammonia and copper ions as a secondary leach for the recovery of silver and gold. In this process, the gold-thiosulphate solution is separated from the solid ore residue and is then passed to a cementation process in which zinc dust is used to cause precipitation of the silver and the gold. The gold and silver then is recovered by conventional methods.

Kerley, Jr. in U.S. Patent 4,269,622 describes a process whereby an ammonium thiosulphate solution containing copper, and sufficient ammonia to maintain a pH of at least 7.5 and at least 0.05% sulphite ion are combined provide a better stability of the thiosulphate radical can be used as a suitable lixiviant for difficult-to-treat ores, particularly those containing manganese. The proposed reaction temperature is between 40-60°C and preferably, 50-60°C. Recovery of the gold from the leach liquor was by the use of metallic zinc, iron or copper for cementation; by electrolysis; or by the addition of soluble sulphides to recover a gold sulphide precipitate.

In U.S. Patent 4,654,078 Kerley, Jr. describes a process whereby the thiosulphate is produced by an in-situ chemical reaction using only elemental sulphur as the raw material, the other principal reagents, ammonia and copper, being recycled for reuse with only very small amounts of make-up being required. Again, the procedure for gold recovery was as he had preciously described in U.S. Patent 4,269,622.

Perez et al. in U.S. Patent 4,654,078 describes the application of the methods proposed by Kerley, Jr. to ores containing manganese and/or copper failed in commercial practice, despite extensive consultation with the inventor, Mr. Kerley. The process described by Perez requires a minimum pH of 9.5 and preferably 10.0-10.5 to be maintained in the lixiviant solution to inhibit the chemical reaction caused by the presence of substantial amounts of metallic iron that result from the grinding of the ore in a ball mill prior to the lixiviating step. At pHs lower than 9.5, iron will be dissolved into the lixiviating solution destroying the copper-ammonium thiosulphate complex and forming the tetrathionate complex. The tetrathionate ion has no lixiviating action on either gold or silver. Perez teaches that the pregnant solution containing the gold and silver thiosulphate anions may be separated from the leached solids and the precious metals are then recovered by conventional precipitation methods using zinc, iron, metallic copper or soluble sulphides. Copper cement was the preferred metal for this cementation step.

According to Wan et al. in U.S. Patent 5,354,359 refractory carbonaceous ores containing precious metals can be treated using thiosulphates at pHs of at least about 9 without the need for any additional pretreatment principally because gold thiosulphate will not load onto carbon. This inability of carbon to adsorb gold thiosulphate had previously been reported by Gallagher et al. in J. Electrochem. Soc. (1989),136(9), 2546-2551. Wan et al. proposed that thiosulphate-based lixiviants can be used as an alternative lixiviant to cyanide to leach gold and silver in the well-established heap leaching process. Precious metal values were preferably recovered from the lixiviant solution by precipitation with copper, zinc, aluminium or soluble sulphides. Wan et al. in Research and development activities for the recovery of gold from noncyanide solutions, In: Hydrometallurgy Fundamentals, Technology and Innovations, Eds. J.B. Hiskey and G.W. Warren, SME, Littleton, Colo. (1993), 415-436, reported that anion exchange resins are unlikely to be suitable for the recovery of gold thiosulphate except possibly from very dilute thiosulphate concentrations and that the concentrations of thiosulphate in gold-leaching systems would be too high for recovery by this technique.

The pressure oxidation of refractory carbonaceous ores containing sulphidic minerals and having preg robbing characteristics prior to thiosulphate dissolution of the gold contained therein, has been disclosed by Marchbank et al. in U.S. Patent 5,536,297. Pressure oxidation may be conducted under hot acidic conditions as disclosed by Thomas et al. in U.S. Patent 5,071,477 or under hot alkaline conditions as disclosed by Mason et al. in U.S. Patent 4,522,589. The oxidised ore slurry is then leached at a temperature between 40 and 55 °C, a pH of between 7 and 8.7, and in a stirred tank reactor. Gold is recovered from the gold-bearing leachate by cementation on zinc, copper or iron; or following the addition of ammonia to prevent copper cyanide formation, cyanide is then added to produce an aurocyanide anion with its subsequent adsorption on a suitable adsorbent, preferably activated carbon; or cyanide and adsorbent is added to the last thiosulphate leach tank and the aurocyanide recovered in a co-current operation. The gold cyanide is stripped from the activated carbon using a hot alkaline cyanide solution. Alternatively, the pregnant solution may be separated from the leached solids and the gold thiosulphate then recovered using either a suitable ion exchange resin or a suitable solvent extractant.

Gold in a refractory sulphide mineral has been recovered by oxidation of the sulphide mineral with a chromolithotropic bacteria followed by leaching using a slightly alkaline solution containing amino acids of microbial origin and thiosulphate as the gold-complexing agent [Groudev et al. Two-stage microbial leaching of a refractory gold-bearing pyrite ore, Miner. Eng. (1996), 9(7), 707-713]. These researchers suggest that the presence of the amino acids did not change the rate of dissolution but served to reduce the overall thiosulphate consumption.

The recovery of platinum group elements (PGEs), gold and silver from playa-evaporite sediments with a hot, highly caustic sodium thiosulphate leach liquor has been disclosed by Groves et al, in U.S. patent 5,405,430. The presence of sodium sulphite in the lixiviant is said to act as a solvent on the host jarosites in the way that gypsum is soluble in sodium thiosulphate solutions. After filtration, the pregnant solution is subjected to a selective precipitation process to recover the precious metals. Lead acetate at about 60°C is recommended for the precipitation of gold from the pregnant solution.

The recovery of gold thiosulphate from solutions and from pulps has been conducted using zinc or copper metal in a cementation process. This requires a solid-liquid separation of the pregnant gold thiosulphate solution from the leached solid residue, thereby introducing added cost into the process by the need to wash the solids with additional solution to remove any residual gold thiosulphate remaining on the solid. Furthermore, adsorption or precipitation of the gold thiosulphate anion onto solids present in the slurry leads to gold-loss by preg robbing.

Activated carbon as a solid/liquid separation mechanism has been proposed to recover the gold thiosulphate in a manner similar to that of the CIP/CIL processes. Gold thiosulphate will not readily load onto activated carbon, but gold cyanide will. Therefore, in the method outlined by Lulham and Lindsay in PCT/GB91/00114, (International Patent Application No. WO 91/11539) required the addition of at least a stoichiometric amount of cyanide ions to a gold thiosulphate solution and adsorption of the resultant gold complex on an adsorbent, such as activated carbon or an ion exchange resin. The cyanide addition is said to convert the gold thiosulphate into gold cyanide so that it will then load onto the sorbent. However, this chemical reaction between the cyanide anion and the gold thiosulphate anion is non-discriminatory and therefore, not all of the gold thiosulphate may be converted to gold cyanide, unconverted gold thiosulphate is then lost to tailings. Furthermore, activated carbon in this recovery process is known to suffer from poor resistance to attrition, slower loading kinetics than ion exchange resins, requires thermal regeneration for reactivation, loads calcium and magnesium ions leading to pore blocking, sorbs organic materials form solution leading to lower gold cyanide recovery.

In plant pulps, contact is made by the activated carbon with silica and alumina such that the carbon can become saturated with fine slurry particles in less than three hours. It has been observed that the equilibrium loading of fines was independent of their concentration in the slurry. Furthermore, the presence of these particles inside an adsorbent decreases the effective diffusion of gold complexes into the adsorbent matrix.

Ion exchange resins as an alternative to activated carbon for use as a solid/liquid separation material resin-in-pulp (RIP) process have been described as having the following advantages:
(a) anion exchange resins are superior to currently available activated carbon with respect to both the kinetics of loading and the equilibrium loading of gold thiosulphate;
(b) resins may be eluted at room temperature, whereas activated carbon must be eluted at temperatures approaching 100°C;
(c) activated carbon requires thermal reactivation;
(d) resins do not appear to be poisoned by organic species such as flotation reagents, machine oils and lubricants, solvents, etc. which have an adverse effect on carbon;
(e) resins do not load calcium carbonate to the same extent as activated carbon, and therefore do not require the same need for hydrochloric acid washing to remove precipitated calcite;
(f) minerals such as clays, shales, haematite, alumina, etc. can inhibit the performance of activated carbon whilst resins do not suffer from this problem to the same extent;
(g) resins do not suffer from attrition to the same extent as activated carbon. Carbon losses are of the order of 10 to 50 g/tonne of ore treated, whereas resin losses are expected to be less than 10 g/tonne; and
(h) resins are not adversely affected to the same extent by temperature as is activated carbon during the adsorption stage.

Ion exchange resins are manufactured in bead form generally from polystyrene-divinyl benzene, acrylic, or phenol-formaldehyde resins. Ion exchange fibres can be produced from either polyacrylonitrile onto which active ligands can be attached, or polypropylene fibres on to which polystyrene-divinylbenzene can be grafted. Ligands can then be attached to the surface of these resins or fibres by conducting one or more suitable chemical reactions. Alternatively, liquids which exhibit ion exchanging properties (generally referred to as "solvent extractants") may be imbibed or impregnated into certain of these polymers.

The resins evaluated for gold cyanide recovery have had several disadvantages, including, small particle size to provide a large surface-to-volume ratio, lower selectivity for gold over other base-metal cyanides prevalent in leach liquors, and pK, values which prevent the resin loading gold cyanide at pH values above 10. While a number of resins have been trialed for gold cyanide recovery, no resins have been identified which are able to be satisfactorily used for the recovery of gold thiosulphate. The loading of gold thiosulphate onto commercially available ion exchange resins is considered to be too low for industrial applications.

We have now found that gold and/or silver thiosulphate may be recovered from solution by the use of a polyurethane matrix having ion exchange resin with an amino functionality dispersed or distributed throughout said polyurethane matrix.

According to the present invention there is provided a process for the extraction of gold and/or silver thiosulphates from solution comprising the steps of:
(a) contacting a gold thiosulphate and/or silver thiosulphate containing lixiviant solution with a polyurethane matrix having ion exchange resin with an amine functionality dispersed or distributed throughout said polyurethane matrix to load said polyurethane matrix with gold thiosulphate and/or silver thiosulphate;
(b) separating the loaded polyurethane matrix; and
(c) recovering the gold and/or silver values by elution from the polyurethane matrix.

Advantageously, we have also found that the process described above is surprisingly improved by contacting the lixiviant solution with the polyurethane matrix in the presence of a water-insoluble alcohol. Accordingly in a preferred embodiment there is provided a process for the extraction of gold and/or silver thiosulphates from solution comprising the steps of:
(a) contacting a gold thiosulphate and/or silver thiosulphate containing lixiviant solution with a polyurethane matrix having ion exchange resin with an amine functionality dispersed or distributed throughout said polyurethane matrix in the presence of an alcohol, said alcohol being substantially insoluble in said lixiviant solution to load said polyurethane matrix with gold thiosulphate and/or silver thiosulphate;
(b) separating the loaded polyurethane matrix; and
(c) recovering the gold and/or silver values by elution from the polyurethane matrix.

We have further found that the surprising improvements found by contacting the lixiviant solution with the ion exchange material in the presence of a water-insoluble alcohol apply not only to polyurethane matrices in which an ion exchange resin is distributed or dispersed but to ion exchange resins generally, including ion exchange beads, such as those used in prior art processes. According to a second aspect there is provided a process for the extraction of gold and/or silver thiosulphates from solution comprising the steps of:
(a) contacting a gold thiosulphate and/or silver thiosulphate containing lixiviant solution with an ion exchange resin with an amine functionality in the presence of an alcohol, said alcohol being substantially insoluble in said lixiviant solution to load said ion exchange resin with gold thiosulphate and/or silver thiosulphate.
(b) separating the loaded ion exchange resin; and
(c) recovering the sorbed gold and/or silver values by elution from the ion exchange resin.

Surprisingly, we have further found that the improvements provided by the use of a water-insoluble alcohol may also be obtained in liquid/liquid extractions. According to a third aspect there is provided a process for the extraction of gold and/or silver thiosulphates from solution comprising the steps of:
(a) contacting a gold thiosulphate and/or silver thiosulphate containing lixiviant solution with a liquid extractant blend, said liquid extractant blend comprising a organic extractant and an alcohol, said liquid extractant blend being substantially immiscible in said lixiviant solution to load the organic extractant with gold thiosulphate and/or silver thiosulphate;
(b) separating the loaded liquid extractant blend; and
(c) recovering the gold and/or silver values from the loaded liquid extractant blend.

The process of the present invention may be conducted by any convenient means. The solution and/or silver thiosulphate may be contacted with the ion exchange resin or liquid extractant by any convenient means known to those skilled in the art which will depend on the form of the ion exchange resin or liquid extractant used. We have found it preferable to maintain the gold and/or silver thiosulphate solution at an alkaline pH. The loaded ion exchange resin or liquid extractant may be separated from the solution by any convenient means which will depend on the form of the ion exchange resin or liquid extractant used.

The recovery of the gold thiosulphate and/or silver thiosulphate may be carried out by any convenient means. Stripping of the ion exchange resin or liquid extractant of the invention maybe accomplished by a suitable solvent such as sodium or ammonium thiocyanate, often containing dimethyl formamide, acidified thiourea, zinc cyanide, or in some instances, pH control by stripping at a pH in excess of 12 and if required, in the added presence of sodium benzoate.

It has surprisingly been found that when the ion exchange resins are dispersed or distributed throughout a polyurethane matrix, as is described in PCT/AU93/00312 and PCT/AU94/00793 and the ion exchange resins are provided with an amine functionality that superior extraction results are achieved. The particularly superior results were not expected from a review of the prior art.

Polyurethane resins are noted for their abrasion and chemical resistance. These resins can be produced as beads, or as fibres, but in particular, they may be expanded to form foams with the cellular properties varying from a microcellular expanded product to highly expanded foams with a density of 10 kg/m³. By the correct selection of polyols, blowing agents and cell control agents these cells may be closed or open. In an open celled product, most of the cell windows are removed during production to leave only the struts behind. If a more open cellular product is desired, then the polyurethane foam can be further improved by "reticulation", a mechanism well-known to those skilled in the production of polyurethane foams. Furthermore, if desired, particles including metal powders, metal alloy particles, inorganic materials (such as barytes), metal oxides (such as magnetite or ferrosilicon) may be added to the polyurethane to modify its final density and if required, to assist in recovery of the resin from the aqueous solutions or pulps.

The polyurethane matrix in which the ion exchange resin is distributed or dispersed offers exceptional abrasion resistance, and resistance to osmotic shock. These polyurethane resins can be formed into particles of a size such that they can be readily recovered from gold thiosulphate and/or silver thiosulphate circuits. This particle size may be significantly larger than for conventional ion exchange resins. As previously noted, conventional ion exchange resins require a small particle size to enable them to have sufficient exchange capacity. Conventional resins are also generally made macro reticular to increase their capacity. It has been reported that this process may lead to pores being generated in the ion exchange resin which can block and reduce its capacity to remove metal ions from solution. The polyurethane matrix may be reticulated open cell foam through which the lixiviant is passed.

The polyurethane matrix has an ion exchange resin with amine functionality dispersed or distributed throughout the matrix. The term "dispersed or distributed" when used herein includes a dispersion of discrete particles as well as networks of polymers which are incorporated onto or into the surfaces, external and internal, of the polyurethane matrix such as in interpenetrating polymer systems.

The amine functionality may preferably be provided by a second polymer, polymerised on the external and/or internal surfaces of the polyurethane matrix. The polyurethane resins can be interpenetrated with a second polymer during, or subsequent to production. Such an interpenetration may be by the formation of a polystyrene-divinyl benzene resin, polyacrylonitrile, polyacrylates, or other desired polymer. Alternatively, this second polymer maybe formed in the polyol prior to the polyurethane resin production.

This second polymer may then be further reacted by such chemical modifications as chloromethylation. The polyurethane foam containing chloromethylated sites may then undergo a further chemical modification such as amination to provide the amine functionality.

As a further embodiment, chloromethylstyrene may be substituted for polystyrene and therefore, an interpenetrated polyurethane resin containing chloromethylated polystyrene, crosslinked with divinyl benzene or other suitable monomer maybe produced. This resin may then undergo further chemical modification such as amination to provide the amine functionality.

Monomers, particularly reactive monomers, such as hydroxyethyl methacrylate, octene diol, hexene 1,2 diol, polybutadiene diol may be incorporated into the polyurethane during its manufacture to provide reactive unsaturated sites in the cured polyurethane. One or more different unsaturated monomers may then be interpenetrated into the cured polyurethane and polymerised. The resultant polymer is thus chemically bound to the polyurethane matrix. Vinylpyridine,1-vinylimidazole, diallyldimethylammonium chloride, [3-(methacryloylamino)propyl] trimethylammonium chloride, styrylguanidine, are examples of such monomers containing an unsaturated functional group. Whilst it is preferred that the monomer(s) or blend of monomer(s) and comonomer(s) be interpenetrated into a polyurethane matrix containing an unsaturated group it is not a requirement of the invention that such reactive site should be present in the polyurethane matrix.

The interpenetrated polyurethane containing a suitable ligand may be induced to undergo a further chemical reaction such as alkylation. For example, a polyurethane may be interpenetrated with a second polymer such as vinylpyridine (possibly in the presence of comonomer such as divinylbenzene) and then the pyridine site could be methylated by reaction with a methyl halide.

Copolymer polyols may be produced by the grafting polymerisation of unsaturated monomers on to poly(ethylene oxide) (EO) or poly(propylene oxide) (PO) or mixed EO-PO containing polyols. Typical monomers would include vinyl pyridine, 1-vinylimidazole, [3-(methacryloylamino)propyl]-trimethylammonium chloride. This polymer polyol may then be incorporated as a raw material in the manufacture of a polyurethane. It is also possible for specific polymers to be induced to undergo further chemical reactions.

In a preferred embodiment of the present invention polyurethane foams incorporate polystyrene-divinyl benzene. The benzene ring is preferably then chloromethylated. Following this reaction, a further reaction may desirably be conducted in which amine functional groups are incorporated into the polyurethane foam. Varying lengths of alkyl chain have been incorporated. Dimethylamine, trimethylamine, triethylamine, tributylamine, dimethylethanolamine, are typical of such alkylamines.

In a further modification, a desired ligand can be incorporated into the polyurethane by reacting it with a diisocyanate to form a prepolymer or adduct, and this prepolymer incorporated into the polyurethane. Depending upon the particular isocyanate selected and/or the particular properties of the polyurethane produced, so the isocyanate prepolymer may be induced to react with the amide groups and any free hydroxyl groups present in the polyurethane resin.

Alternatively, a selected diisocyanate monomer such as hexamethylene diisocyanate (HDI) or isocyanate-terminated prepolymer may be reacted with amide groups or unreacted hydroxyl groups or both amide and hydroxyl groups present in a polyurethane polymer. Desired ligands can then be reacted with the unreacted isocyanate groups.

Any suitable amine functionality may be introduced such as by amination. Suitable amine functionality may be provided by alkylamines wherein the alkyl chain is between 1 and 6 carbon atoms long, or which can be reacted to form an imidazoline ligand, or which may be a guanidine, pyridine, quinoline, pyrrolidine, diallylamine, dibenzylamine, or other suitable amine including heterocyclic amines. It is particularly preferred that the amine functionality is provided by a quaternary amine such quaternary amines are preferably alkyl or mixed alkyl trimethyl ammonium salts, including dodecyl, tetradecyl and hexadecyl. One or more methyl groups may be replaced with alkyl groups containing from 2 to 16 carbon atoms and/or substituted or non-substituted aromatic ring structures including benzyl, naphthenyl, cyclohexyl or heterocyclic groups.

In the second aspect of the present invention a wide variety of known ion exchange resins may be made far more effective by contacting the lixiviant solution with the ion exchange resin in the presence of a water-insoluble alcohol. Such ion exchange resins include anion exchange resins having amine functionality, preferably a strong base resin consisting of a quaternary amine attached to a polymer backbone (e.g. polystyrene beads). A strong base resin is preferred over a weak base resin because while a strong base resin's effectiveness is not dependent on environmental pH, a weak base resin typically requires an environmental pH of less than, or about 7. The capacity of a typical strong base resin is also greater than that of a weak base resin, such that a lower volume of resin is required. Furthermore, because strong base resins are more widely used, they are typically more available and economical than weak base resins. Gel resins and macroporous resins are both suitable, with macroporous resins being preferred because they are more durable and because the resin is not subjected to significant variations in pH in this process which, if it were the case, would call for gel resins over macroporous resins. The preferred resin comprises beads of at least about 0.8 mm in average diameter to facilitate screening. Suitable resins include all commercial strong-base resins of either Type I (triethylamine functional groups) or Type II (triethyl ethanolamine functional groups), particularly those that are based on a macroporous matrix of polystyrene, cross-linked with 8-10% divinyl benzene. Specific strong-base ion exchange resins for use in this invention include Dowex M-41 and Dowex-MSA-1 (Type I), Dowex M-42, Dowex MSA-2 (Type II), Dowex-SBR, Dowex M-41 which are manufactured by Dow Chemical, Amberlite IRA-900C, Amberlite IRA-904 (Type I), and Amberlite IRA-910 (Type II), which are manufactured by Rohm & Haas. Also satisfactory are the Lewaitit M-600 resins. MP 500, which is manufactured by Bayer, and the gel-type resin 21K, manufactured by Dow Chemical. A suitable weak-base resin is A7, available from Rohm & Haas.

Various guanidine functional groups may also been introduced into the polyurethane foam. For example, guanidine, di-o-tolyl guanidine, di-n-alkylguanidine, N-(6-aminohexyl)-N'-butyl guanidine, are examples of such ligands. This includes for example guanidine complexes such as disclosed in GB 2 186 563A, in U.S. Patents 4,814,007, 4,895,597, 4,992,200, 5,028,259, 5,198,021, 5,340,380, WO 93/19,212, WO 97/10,367 or as disclosed in ZA89/2733 which are specifically incorporated by reference.

Other amine functionality introduced includes pyridine, quinoline, benzylamine, dibenzylamine, pyrrolidine, diallylamine, aminodiacetate, amino phosphonic acids.

In a further preferred embodiment, polyacrylonitrile is incorporated into the polyurethane foam. Amine functionality is then preferably introduced into the polymer. For example, diethylenetriamine and ethylenediamine have been reacted with the nitrile group introduced into the polyurethane foam. By the selection of reaction conditions, so imidazoline groups may be formed.

Epoxy resins may be dissolved in a suitable solvent and blended with aliphatic amines such as DETA (diethylene triamine), TETA (triethylene tetramine), poly(oxypropylene triamine) and the like and interpenetrated into the polyurethane matrix and cured.

Lewis-base modifiers, such as alkyl phosphorus esters, trialkyl phosphate, dialkyl alkyl phosphonate, alkyl dialkylphosphinate, trialkyl phosphine oxides, sulphones, and sulphoxides, may be combined with the amine-based extractants to further modify the extractability of these organic complexes. The inductive effects of the alkyl chains and solvation of the amine or amine salt is believed to increase the availability of the nitrogen electron pair, which in turn encourages protonation of the amine. High temperature and low ionic strength may inhibit solvation extraction.

In the preferred embodiment of the present invention the ion exchange resin is contacted with the lixiviant solution in the presence of an alcohol which is substantially insoluble in the lixiviant solution. It will be understood that the term alcohol also includes phenols and organic molecules containing the -OH moiety. It will be understood that the term "substantially insoluble" means the alcohol is insoluble in the lixiviant solution although a small or insignificant amount of the alcohol may dissolve in the lixiviant solution. Suitable alcohols include n-pentanol, n-hexanol, 2-ethylhexanol, isodecanol, dodecanol, tridecanol, hexadecanol, octadeconal; phenols such as heptylphenol, octylphenol, nonylphenol and dodecylphenol. Preferably the alcohol is a non-aromatic alcohol. The preferred non-aromatic alcohols include pentanol and tridecanol.

In the process of the present invention where liquid extractant blend is used it is preferable that the molar ratio of organic extractant to water insoluble alcohol is in the range of from 1:100 to 100:1. The preferred ratio being 1:3. In a further preferred embodiment it is preferable that the water-insoluble alcohol consist of a non-aromatic alcohol or mixture thereof. In this embodiment any aromatic alcohol present in the liquid extractant blend is to be considered part of the organic extractant for the purposes of calculating the molar ratio. Any inert carriers such as macro reticular polystyrene-divinyl benzene is to be disregarded when determining the molar ratio.

In the process of the present invention the amount of alcohol relative to any ion exchange resin is preferably in range of from 10% to 300% by weight of the ion exchange resin

The present invention is particularly suitable for the extraction of gold and/or silver thiosulphates from solutions. The process may be used to extract gold thiosulphate from a gold thiosulphate containing solution which is part of a pulp or slurry.

In the process of the third aspect of the present invention a liquid extractant blend is employed for the extraction of gold and/or silver thiosulphate from solution. The liquid extractant blend comprises an organic extractant and an alcohol wherein the liquid extractant blend is substantially insoluble in the lixiviant solution. Optionally, the liquid extractant blend may include an organic solvent.

Suitable organic extractants contain amine functionality and include trioctylamine, guanidine functionality, tri-(C₈-C₁₀)alkyl methyl ammonium chloride, and particularly trimethyl hexadecyl ammonium chloride, or other extractant, including phosphine oxides, sulphones, sulphoxides, tri(2-ethyl hexyl) phosphate, tributylphosphate and dibutyl, butyl phosphonate. Preferably the organic extractant is trimethyl hexadecyl ammonium chloride.

The substantially insoluble alcohols referred to herein may be blended with the organic extractant to form the liquid extractant blend. A wide variety of essentially water-immiscible hydrocarbon solvents may be used in the liquid extractant blend. Suitable hydrocarbon solvents include aliphatic and aromatic hydrocarbons. Preferably the hydrocarbon solvents will be essentially chemically inert and have flash points in excess of 60°C. The preferred hydrocarbon solvent is a narrow cut kerosene.

The liquid extractant blend, may advantageously be impregnated or imbibed into an ion exchange resin or be incorporated into a suitable non-reactive carrier. Such non-reactive carriers may include activated carbon, a polymer in a suitable form such as macro-reticular polystyrene-divinyl benzene, acrylate, polyvinyl alcohol, polyvinyl chloride, polyurethane, was (including paraffin wax, bees wax) which is insoluble in the water-insoluble alcohol. Such carrier would generally be in particulate bead-form and preferably contains a large internal void volume. Internal voidage is generally obtained by adding a suitable porogen or porogen mixture during the bead polymerisation step. These impregnated polymers may also be incorporated into the polyurethane matrix incorporating ion exchange functionality, such as foam during its manufacture.

The incorporation of these extractants into a polyurethane matrix can be modified by either pre- or post-incorporation of a diisocyanate or a diisocyanate prepolymer onto the polyurethane foam and curing it such as by passing steam through the isocyanate-impregnated polyurethane foam containing the organic extractant. Alternatively, the organic extractant may be blended with the diisocyanate component (providing that the organic reactant does not react with the diisocyanate) to form a solid product prior to its incorporation onto the polyurethane foam.

The ion exchange resins for use in the present invention are also capable of impregnation with liquid extractant blends which are able to increase the removal of gold and/or silver thiosulphate anions from the lixiviant solution.

The lixiviant solutions may be clarified, such as is normally obtained in gold heap leaching operations. Lixiviant solutions may also be obtained from pulps, such as occur in carbon-in-pulp, carbon-in-leach, resin-in-pulp or resin-in-leach processes.

In the well-established heap leaching process for gold recovery, clarified gold-containing solutions are generated. Furthermore, if a solid/liquid separation step is included in the gold lixiviation circuit, clarified gold-containing solutions are obtained. Gold thiosulphate when present in these clarified solutions may be recovered by the application of solvent extraction technology. In this process, gold thiosulphate present in the aqueous phase is contacted with a suitable amine which may be dispersed in a substantially water-insoluble organic carrier fluid. The gold thiosulphate will then transfer from the aqueous phase to the organic phase. After a suitable contact time, phase disengagement followed by phase separation is allowed to occur. The gold thiosulphate which has transferred into the organic phase is then stripped by again contacting the organic phase with a suitable aqueous stripping solution. The gold is then recovered from the stripped solution by any suitable method such as reduction, precipitation, cementation or electrowinning. The method outlined will be clearly evident to those who are skilled in the use of solvent extraction technology.

The impregnated resins and polyurethane-based polymers may optionally be used to recover the gold thiosulphate from these same pregnant heap leach solutions. The gold thiosulphate so recovered may then be eluted from these solid sorbents in the manner previously disclosed.

Throughout this specification and the claims which follow, unless the context requires otherwise, the word "comprise", or variations such as "comprises" or "comprising", will be understood to imply the inclusion of a stated integer or group of integers but not the exclusion of any other integer or group of integers.

### EXAMPLES

### EXAMPLE 1:

100 ml of an aqueous solution containing 10 ppm of gold as the thiosulphate anion was prepared using a 0.005M sodium thiosulphate. The initial solution pH was adjusted using ammonia and was then contacted for 5 minutes with 10 ml of an organic solution prepared as follows:
(a) 5 g/l of a 28.5% active aqueous solution of trimethyl hexadecyl ammonium chloride (APS Specialties Quatramine C16/29) in pentanol.
(b) 5 g/l of Aliquat 336 in pentanol.

The following extractions (in g/l were obtained:

| | | | |
|---|---|---|---|
| | pH 8 | pH 9 | pH 10 |
| Extractant (a) | 10.4 | 16.4 | 15.0 |
| Extractant (b) | 12.8 | 16.0 | 10.6 |

### EXAMPLE 2.

100 ml of an aqueous solution containing 5 ppm of gold thiosulphate was contacted for 5 minutes with 10 ml of an organic solution prepared as follows:
(a) 5 g/l of a 28.5% active aqueous solution of trimethyl hexadecyl ammonium chloride (APS Specialties Quatramine C16/29) in pentanol.
(b) 5 g/l of Aliquat 336 in pentanol.

The following extractions (in g/l were obtained:

| | | | |
|---|---|---|---|
| | pH 8 | pH 9 | pH 10 |
| Extractant (a) | 2.4 | 7.4 | 5.6 |
| Extractant (b) | 8.8 | 8.4 | 8.2 |

### EXAMPLE 3:

100 ml of an aqueous solution containing 10.2 ppm of gold thiosulphate plus 1M ammonium thiosulphate at pH 10 was contacted for 5 minutes with 10 ml of an organic solution prepared as follows:
(a) 5 g/l of a 28.5% active aqueous solution of trimethyl hexadecyl ammonium chloride (APS Specialties Quatramine C 16/29) in pentanol.
(b) 5 g/l of Aliquat 336 in pentanol.

The following extractions (in g/l) were obtained:

| | |
|---|---|
| Extractant (a) | 2.8 |
| Extractant (b) | 0.6 |

### EXAMPLE 4.

100 ml of an aqueous solution containing 10.2 ppm of gold thiosulphate plus 1M ammonium thiosulphate plus 1M sodium thiosulphate at pH 10 was contacted for 5 minutes with 10 ml of an organic solution prepared as follows:
(a) 5 g/1 of a 28.5% active aqueous solution of trimethyl hexadecyl ammonium chloride (APS Specialties Quatramine C16/29) in pentanol.
(b) 5 g/1 of Aliquat 336 in pentanol.
The following extractions (in g/1) were obtained:

| | |
|---|---|
| Extractant (a) | 7.8 |
| Extractant (b) | 5.6 |

### EXAMPLE 5.

Extractant (a) as for Examples 1, 2, 3 and 4 was blended in the ratio 1:3 with pentanol and then impregnated into the following polymers:
XAD 7 (hydrophilic bead)*
XAD 16 (hydrophobic bead)* (* Product of Rohm & Haas)
Activated carbon
Reticulated polyurethane foam

Each of the above impregnated polymers were then contacted at room temperature with 100 ml of a solution containing 10.2 ppm gold thiosulphate in 0.005M sodium thiosulphate adjusted to an initial pH of 10 for 2 hours. The following loadings of gold thiosulphate were obtained:
50 mg of impregnated XAD 7 (hydrophilic bead) loaded
19.8 g Au/kg of impregnated polymer,
50 mg of impregnated XAD 16 (hydrophobic bead) loaded
20.0 g Au/kg of impregnated polymer,
100 mg of impregnated activated carbon loaded 0.5 g Au/kg of impregnated carbon,
100 mg of an impregnated and reticulated polyurethane foam loaded 5.4 g Au/kg of impregnated polyurethane foam.

The poor loading of the gold thiosulphate onto activated carbon supports the opportunity to recover gold thiosulphate from ores containing carbonaceous matter.

### EXAMPLE 6.

100 ml of an aqueous solution containing 10 ppm of gold as the thiosulphate anion was prepared using a 0.005M sodium thiosulphate. The initial solution pH was adjusted using ammonia and was then contacted at room temperature with 0.1 of a solid prepared by the polymerisation of diallyl amine. After 6 hours the resin was found to have loaded 4900 mg of gold/ kg of polymer.

### EXAMPLE 7

(a) A DMAPMA-BA (N[3-(dimethylamino) propyl] methacrylamide-butyl acrylate) modified polymer was interpenetrated into a polyurethane foam.
(b) An epoxy-DETA (diethylene triacnine) blend was interpenetrated into a polyurethane foam.

Both foams were then contacted at room temperature with a solution containing 10.4 ppm gold thiosulphate in 0.2 M sodium thiosulphate adjusted to an initial pH of 7.5 for 2 hours.
Polymer (a) loaded 2.7 g Au/kg modified polyurethane foam,
Polymer (b) loaded 1.2g Au/kg modified polyurethane foam,

### EXAMPLE 8

An aqueous solution containing 10.3 ppm of gold thiosulphate plus 0.2 M sodium thiosulphate at pH 9 was contacted for 5 minutes with an equal volume of an organic extractant containing 10% of Aliquat 336 in toluene. 4.9 g Au/l organic was obtained

### EXAMPLE 9

IRA 400, a strong-base ion exchange resin manufactured by Rohm and Haas, activated carbon, impregnated with 45.6% of Aliquat 336, a reticulated polyurethane foam, impregnated with 155% of Aliquat 336, were each separately contacted with an aqueous solution containing 10 ppm gold thiosulphate plus 0.5 M sodium thiosulphate adjusted to pH 10 for 2 hours at room temperature. The following loadings were obtained:

| | |
|---|---|
| IRA 400 | 1.1 g Au/kg polymer, |
| Activated carbon + Aliquat 336 | 0.056 g Au/kg product. |
| Polyurethane foam + Aliquat 336 | 1.3 g Au/kg product. |

### EXAMPLE 10

100 ml of an aqueous solution containing 10.5 ppm of gold as the thiosulphate anion was prepared using 0.005 M sodium thiosulphate. The pH of the solution was adjusted to 10 using ammonia and then contacted for 5 minutes with 10 ml of an organic solution prepared as follows:
(a) 5g/l of a 28.5% active aqueous solution of trimethyl hexadecyl ammonium chloride in a 1:1 mixture of nonylphenol and Shellsol 2046.
(b) 5g/l of Aliquat 336 in a 1:1 mixture of nonylphenol and Shetlsol 2046.
(c) 5 g/l of Alamine 336 (a tertiary amine manufactured by Henkel Corporation) in a 1:1 mixture on nonylphenol and Shellsol 2046.
(d) 5 g/l of Primene JMT (a primary amine manufactured by Rohm and Haas) in a 1:1 mixture of nonylphenol and Shellsol 2046.
(e) 5 g/l of Primene JMT (a primary amine manufactured by Rohm and Haas) plus 5 g/l tributylphosphate in a 1:1 mixture of nonylphenol and Shellsol 2046.

### EXAMPLE II.

100 ml of an aqueous solution containing 10.7 ppm of gold thiosulphate anion was prepared using 0.005M sodium thiosulphate. The pH of the solution was adjusted using ammonia and then contacted for 5 minutes with 10 ml of an organic solution prepared as follows:
(a) 5 g/l of a active aqueous solution of trimethyl hexadecyl ammonium chloride in pentanol.
(b) 5 g/l of Aliquat 336 in pentanol.
(c) 5g/l of Alamine 336 (a tertiary amine manufactured by Henkel Corporation) in pentanol.
(d) 5 g/l of Primene JMT (a primary amine manufactured by Rohm and Haas) in pentanol.
(e) 5 g/l of Primene JMT (a primary amine manufactured by Rohm and Haas) plus 5 g/l tributylphosphate in pentanol.

## Claims

1. A process for the extraction of gold and/or silver thiosulphates from solution comprising the steps of:
a) contacting a gold thiosulphate and/or silver thiosulphate containing lixiviant solution with a polyurethane matrix having ion exchange resin with an amine functionality dispersed or distributed throughout said polyurethane matrix in the presence of an alcohol, said alcohol being substantially insoluble in said lixiviant solution to load said polyurethane matrix with gold thiosulphate and/or silver thiosulphate;
b) separating the loaded polyurethane matrix; and
c) recovering the gold and/or silver values by elution from the polyurethane matrix.

2. A process according to claim 1 wherein the alcohol which is substantially insoluble in said lixiviant solution is selected from the group consisting of n-pentanol, n-hexanol, 2-ethyl hexanol, isodecanol, dodecanol, tridecanol, hexadecanol, octadecanol, phenols such as heptylphenol, octylphenol, nonylphenol and dodecylphenol, preferably n-pentanol and tridecanol.

3. A process according to either claim 1 or claim 2 wherein the alcohol which is substantially insoluble in said lixiviant solution is a non-aromatic alcohol.

4. A process according to any one of the claims 1 to 3 wherein the amount of alcohol relative to any ion exchange resin is in range of from 10% to 300% by weight of the ion exchange resin.

5. A process according to any one of claims 1 to 4 wherein the polyurethane matrix is selected from expanded polyurethane foam and reticulated polyurethane foam.

6. A process according to any of claims 1 to 5 wherein the amine functionality is provided by a second polymer polymerised on the external and/or internal surfaces of the polyurethane matrix.

7. A process according to any one of claims 1 to 6 wherein second polymer is selected from polystyrene-divinyl benzene having amine functionality subsequently reacted onto the second polymer and polyacrylonitrile having amine functionality subsequently reacted onto the second polymer.

8. A process according to any one of claims 1 to 7 wherein second polymer is an epoxy resin which is dissolved in a suitable solvent and blended with aliphatic amines such as DETA (diethylene triamine), TETA (triethylene tetramiine), poly(oxypropylene triamine) and interpenetrated into the polyurethane matrix and cured.

9. A process according to any one of claims 1 to 8 wherein an organic extractant is impregnated in the polyurethane matrix.

10. A process according to claim 9 wherein the organic extractant contains amine functionality and is selected from the group consisting of trioctylamine, guanidines, tri-(C₈₋₁₀) alkyl methyl ammonium chloride, trimethyl hexadecyl ammonium chloride, phosphine oxides, sulphones, sulphoxides, tri(2-ethyl hexyl) phosphate, tributylphosphate and dibutyl butyl phosphonate, preferably trimethyl hexadecyl ammonium chloride.

11. A process according to any one of claims 1 to 10 wherein the organic extractant is blended with a water-immiscible hydrocarbon solvent.

12. A process for the extraction of gold and/or silver thiosulphates from solution comprising the steps of:
a) contacting a gold thioosulphate and/or silver thiosulphate containing lixiviant solution with an ion exchange resin with an amine functionality in the presence of an alcohol, said alcohol being substantially insoluble in said lixiviant solution to load said ion exchange resin with gold thiosulphate and/or silver thiosulphate.
b) separating the loaded ion exchange resin; and
c) recovering the sorbed gold and/or silver values by elution from the ion exchange resin.

13. A process according to claim 12 wherein the alcohol which is substantially insoluble in said lixiviant solution is selected from the group consisting of n-pentanol, n-hexanol, 2-ethyl hexanol, isodecanol, dodecanol, tridecanol, hexadecanol, octadecanol, phenols such as heptylphenol, octylphenol, nonylphenol and dodecylphenol, preferably n-pentanol and tridecanol.

14. A process according to either claim 12 or claim 13 wherein the alcohol which is substantially insoluble in said lixiviant solution is a non-aromatic alcohol.

15. A process according to any one of claims 12 to 14 wherein the amount of alcohol relative to any ion exchange resin is preferably in range of from 10% to 300°r6 by weight of the ion exchange resin.

16. A process according to any one of claims 12 to 15 wherein an organic extractant is impregnated in the ion exchange resin.

17. A process according to claim 16 wherein the organic extractant contains amine functionality and is selected from the group consisting of trioctylamine, guanidines, tri-(C₈₋₁₀) alkyl methyl ammonium chloride, trimethyl hexadecyl ammonium chloride, phosphine oxides, sulphones, sulphoxides, tri(2-ethyl hexyl) phosphate, tributylphosphate and dibutyl butyl phosphonate, preferably trimethyl hexadecyl ammonium chloride.

18. A process according to any one of claims 16 or 17 wherein the organic extractant is blended with a water-immiscible hydrocarbon solvent.

19. A process according to any one of claims 12 to 18 wherein the ion exchange resin is an anion exchange resin having amine functionality, preferably a strong base resin consisting of a quaternary amine attached to a polymer backbone.

20. A process for the extraction of gold and/or silver thiosulphates from solution comprising the steps of:
a) contacting a gold thiosulphate and/or silver thiosulphate containing lixiviant solution with a liquid extractant blend, said liquid extractant blend comprising a organic extractant and a substantially water-insoluble alcohol impregnated or imbibed into a suitable non-reactive carrier, said liquid extractant blend being substantially immiscible in said lixiviant solution to load the organic extractant with gold thiosulphate and/or silver thiosulphate;
b) separating the loaded liquid extractant blend; and
c) recovering the gold and/or silver values from the loaded liquid extractant blend.

21. A process according to claim 20 wherein the substantially water-insoluble alcohol is selected from the group consisting of n-pentanol, n-hexanol, 2-ethyl hexanol, isodecanol, dodecanol, tridecanol, hexadecanol, octadecanol, phenols such as heptylphenol, octylphenol, nonylphenol and dodecylphenol, preferably n-pentanol and tridecanol.

22. A process according to either claim 20 or claim 21 wherein the substantially water-insoluble alcohol is a non-aromatic alcohol.

23. A process according to any one of claims 20 to 22 wherein the molar ratio of organic extractant to water insoluble alcohol is in the range of from 1:100 to 100:1 and preferably the molar ratio of the organic extractant to water insoluble alcohol is 1:3.

24. A process according to any one of claims 20 to 23 wherein the non-reactive carrier is selected from the group consisting of activated carbon, a polymer in the form of a macro-reticular polystyrene-divinyl benzene, acrylate, polyvinyl alcohol, polyvinyl chloride, polyurethane, wax (including paraffin wax, bees wax) which is insoluble in the water-insoluble alcohol.

25. A process according to any one of claims 20 to 24 wherein the non-reactive carrier is in particulate bead-form and contains a large internal void volume.

26. A process according to any one of claims 20 to 25 wherein organic extractant is impregnated in the ion exchange resin.

27. A process according to claim 26 wherein the organic extractant contains amine functionality and is selected from the group consisting of trioctylamine, guanidines, tri(C₈₋₁₀) alkyl methyl ammonium chloride, trimethyl hexadecyl ammonium chloride, phosphine oxides, sulphones, sulphoxides, tri(2-ethyl hexyl) phosphate, tributylphosphate and dibutyl butyl phosphonate, preferably trimethyl hexadecyl ammonium chloride.

28. A process according to any one of claims 26 or 27 wherein the organic extractant is blended with a water-immiscible hydrocarbon solvent.

29. A process according to any one of clams 1 to 28 wherein the gold and/or silver thiosulphate solution is maintained at an alkaline pH.

## Patentansprüche

1. Verfahren zur Extraktion von Gold- und/oder Silberthiosulfaten aus einer Lösung, das die Schritte umfaßt:
a) Kontaktieren einer Goldthiosulfat und/oder Silberthiosulfat enthaltenden Auslaugmittellösung mit einer Polyurethanmatrix, die in der Polyurethanmatrix ein Ionenaustauschharz mit einer Aminfunktionalität dispergiert oder verteilt aufweist, in Gegenwart eines Alkohols, wobei der Alkohol in der Auslaugmittellösung im wesentlichen unlöslich ist, um die Polyurethanmatrix mit Goldthiosulfat und/oder Silberthiosulfat zu beladen;
b) Abtrennen der beladenen Polyurethanmatrix;
c) Gewinnen des Gold- und/oder Silber-Edelmetallgehalts durch Elution aus der Polyurethanmatrix.

2. Verfahren nach Anspruch 1, wobei der Alkohol, der in der Auslaugmittellösung im wesentlichen unlöslich ist, aus der Gruppe ausgewählt ist, die besteht aus n-Pentanol, n-Hexanol, 2-Ethylhexanol, Isodecanol, Dodecanol, Tridecanol, Hexadecanol, Octadecanol, Phenolen wie Heptylphenol, Octylphenol, Nonylphenol und Dodecylphenol, vorzugsweise n-Pentanol und Tridecanol.

3. Verfahren nach entweder Anspruch 1 oder Anspruch 2, wobei der Alkohol, der in der Auslaugmittellösung im wesentlichen unlöslich ist, ein nichtaromatischer Alkohol ist.

4. Verfahren nach irgendeinem der Ansprüche 1 bis 3, wobei die Menge an Alkohol im Verhältnis zu dem gesamten Ionenaustauschharz im Bereich von 10 bis 300 Gew.-% des Ionenaustauschharzes liegt.

5. Verfahren nach irgendeinem der Ansprüche 1 bis 4, wobei die Polyurethanmatrix ausgewählt ist aus expandiertem Polyurethanschaum und retikuliertem Polyurethanschaum.

6. Verfahren nach irgendeinem der Ansprüche 1 bis 5, wobei die Aminfunktionalität von einem zweiten Polymer bereitgestellt wird, das auf die externen und/oder internen Oberflächen der Polyurethanmatrix aufpolymerisiert ist.

7. Verfahren nach irgendeinem der Ansprüche 1 bis 6, wobei das zweite Polymer ausgewählt ist aus Polystyrol-Divinylbenzol mit einer Aminfunktionalität, die nachträglich reaktiv auf das zweite Polymer aufgebracht wurde, und Polyacrylnitril mit Aminfunktionalität, die nachträglich reaktiv auf das zweite Polymer aufgebracht wurde.

8. Verfahren nach irgendeinem der Ansprüche 1 bis 7, wobei das zweite Polymer ein Epoxyharz ist, das in einem geeigneten Lösemittel aufgelöst und mit aliphatischen Aminen wie beispielsweise DETA (Diethylentriamin), TETA (Triethylentetramin), Poly(oxypropylentriamin) vermischt ist und das man in die Polyurethanmatrix eindringen und härten ließ.

9. Verfahren nach irgendeinem der Ansprüche 1 bis 8, wobei die Polyurethanmatrix mit einem organischen Extraktionsmittel imprägniert ist.

10. Verfahren nach Anspruch 9, wobei das organische Extraktionsmittel Aminfunktionalität aufweist und aus der Gruppe ausgewählt ist, die besteht aus Trioctylamin, Guanidinen, Tri-(C₈₋₁₀)-alkylmethylammoniumchlorid, Trimethylhexadecylammoniumchlorid, Phosphinoxiden, Sulfonen, Sulfoxiden, Tri(2-ethylhexyl)phosphat, Tributylphosphat und Dibutylbutylphosphonat, vorzugsweise Trimethylhexadecylammoniumchlorid.

11. Verfahren nach irgendeinem der Ansprüche 1 bis 10, wobei das organische Extraktionsmittel mit einem mit Wasser nicht mischbaren Kohlenwasserstofflösemittel vermischt ist.

12. Verfahren zur Extraktion von Gold- und/oder Silberthiosulfaten aus einer Lösung, das die Schritte umfaßt:
a) Kontaktieren einer Goldthiosulfat und/oder Silberthiosulfat enthaltenden Auslaugmittellösung mit einem Ionenaustauschharz mit einer Aminfunktionalität in Gegenwart eines Alkohols, wobei der Alkohol in der Auslaugmittellösung im wesentlichen unlöslich ist, um das Ionenaustauschharz mit Goldthiosulfat und/oder Silberthiosulfat zu beladen;
b) Abtrennen des beladenen Ionenaustauschharzes; und
c) Gewinnen des sorbierten Gold- und/oder Silber-Edelmetallgehalts durch Elution von dem Ionenaustauschharz.

13. Verfahren nach Anspruch 12, wobei der Alkohol, der in der Auslaugmittellösung im wesentlichen unlöslich ist, aus der Gruppe ausgewählt ist, die besteht aus n-Pentanol, n-Hexanol, 2-Ethylhexanol, Isodecanol, Dodecanol, Tridecanol, Hexadecanol, Octadecanol, Phenolen wie Heptylphenol, Octylphenol, Nonylphenol und Dodecylphenol, vorzugsweise n-Pentanol und Tridecanol.

14. Verfahren nach Anspruch 12 oder 13, wobei der Alkohol, der in der Auslaugmittellösung im wesentlichen unlöslich ist, ein nichtaromatischer Alkohol ist.

15. Verfahren nach irgendeinem der Ansprüche 12 bis 14, wobei die Menge an Alkohol im Verhältnis zu dem gesamten Ionenaustauschharz vorzugsweise im Bereich von 10 bis 300 Gew.-% des Ionenaustauschharzes liegt.

16. Verfahren nach irgendeinem der Ansprüche 12 bis 15, wobei in das Ionenaustauschharz ein organisches Extraktionsmittel einimprägniert ist.

17. Verfahren nach Anspruch 16, wobei das organische Extraktionsmittel eine Aminfunktionalität aufweist und aus der Gruppe ausgewählt ist, die besteht aus Trioctylamin, Guanidinen, Tri-(C₈₋₁₀)-alkylmethylammoniumchlorid, Trimethylhexadecylammoniumchlorid, Phosphinoxiden, Sulfonen, Sulfoxiden, Tri(2-ethylhexyl)phosphat, Tributylphosphat und Dibutylbutylphosphonat, vorzugsweise Trimethylhexadecylammoniumchlorid.

18. Verfahren nach irgendeinem der Ansprüche 16 oder 17, wobei das organische Extraktionsmittel mit einem mit Wasser nicht mischbaren Kohlenwasserstofflösemittel vermischt ist.

19. Verfahren nach irgendeinem der Ansprüche 12 bis 18, wobei das Ionenaustauschharz ein Anionenaustauschharz mit Aminfunktionalität ist, vorzugsweise ein stark basisches Harz, das aus quaternärem Amin besteht, das an ein Polymerrückgrat angefügt ist.

20. Verfahren zur Extraktion von Gold- und/oder Silberthiosulfaten aus einer Lösung, das die Schritte umfaßt:
a) Kontaktieren einer Goldthiosulfat und/oder Silberthiosulfat enthaltenden Auslaugmittellösung mit einer flüssigen Extraktionsmittelmischung, wobei die flüssige Extraktionsmittelmischung ein organisches Extraktionsmittel und einen im wesentlichen wasserunlöslichen Alkohol umfaßt, der in einen geeigneten nichtreaktiven Träger einimprägniert ist oder von diesem aufgesaugt ist, wobei die flüssige Extraktionsmittelmischung mit der Auslaugmittellösung im wesentlichen unmischbar ist, um das organische Extraktionsmittel mit Goldthiosulfat und/oder Silberthiosulfat zu beladen,
b) Abtrennen der beladenen flüssigen Extraktionsmittelmischung; und
c) Gewinnen des Gold- und/oder Silber-Edelmetallgehalts aus der beladenen flüssigen Extraktionsmittelmischung.

21. Verfahren nach Anspruch 20, wobei der im wesentlichen wasserunlösliche Alkohol aus der Gruppe ausgewählt ist, die besteht aus n-Pentanol, n-Hexanol, 2-Ethylhexanol, Isodecanol, Dodecanol, Tridecanol, Hexadecanol, Octadecanol, Phenolen wie Heptylphenol, Octylphenol, Nonylphenol und Dodecylphenol, vorzugsweise n-Pentanol und Tridecanol.

22. Verfahren nach entweder Anspruch 20 oder 21, wobei der im wesentlichen wasserunlösliche Alkohol ein nichtaromatischer Alkohol ist.

23. Verfahren nach irgendeinem der Ansprüche 20 bis 22, wobei das molare Verhältnis von organischem Extraktionsmittel zu wasserunlöslichem Alkohol im Bereich von 1:100 bis 100:1 liegt, und das molare Verhältnis des organischen Extraktionsmittels zu wasserunlöslichem Alkohol vorzugsweise 1:3 beträgt.

24. Verfahren nach irgendeinem der Ansprüche 20 bis 23, wobei der nichtreaktive Träger aus der Gruppe ausgewählt ist, die besteht aus Aktivkohle, einem Polymer in Form eines makroretikulären Polystyrol-Divinylbenzols, Acrylats, Polyvinylalkohols, Polyvinylchlorids, Polyurethans, Wachses (einschließlich Paraffinwachs, Bienenwachs), das in dem wasserunlöslichen Alkohol unlöslich ist.

25. Verfahren nach irgendeinem der Ansprüche 20 bis 24, wobei der nichtreaktive Träger in teilchenförmiger Perlenform vorliegt und ein großes internes freies Volumen aufweist.

26. Verfahren nach irgendeinem der Ansprüche 20 bis 25, wobei in das Ionenaustauschharz organisches Extraktionsmittel einimprägniert ist.

27. Verfahren nach Anspruch 26, wobei das organische Extraktionsmittel eine Aminfunktionalität enthält und aus der Gruppe ausgewählt ist, die besteht aus Trioctylamin, Guanidinen, Tri- (C₈₋₁₀) -alkylmethylammoniumchlorid, Trimethylhexadecylammoniumchlorid, Phosphinoxiden, Sulfonen, Sulfoxiden, Tri(2-ethylhexyl)phosphat, Tributylphosphat und Dibutylbutylphosphonat, vorzugsweise Trimethylhexadecylammoniumchlorid.

28. Verfahren nach irgendeinem der Ansprüche 26 oder 27, wobei das organische Extraktionsmittel mit einem mit Wasser nicht mischbaren Kohlenwasserstofflösemittel vermischt ist.

29. Verfahren nach irgendeinem der Ansprüche 1 bis 28, wobei die Gold- und/oder Silberthiosulfatlösung auf einem alkalischen pH gehalten wird.

## Revendications

1. Procédé d'extraction de thiosulfates d'or et/ou d'argent à partir d'une solution, comprenant les étapes de :
a) mise en contact d'une solution de lixiviation contenant le thiosulfate d'or et/ou le thiosulfate d'argent avec une matrice de polyuréthanne ayant une résine échangeuse d'ion et une fonctionnalité amine, dispersée ou distribuée dans ladite matrice de polyuréthanne, en la présence d'un alcool, ledit alcool étant sensiblement insoluble dans ladite solution de lixiviation, pour charger ladite matrice de polyuréthanne de thiosulfate d'or et/ou de thiosulfate d'argent ;
b) séparation de la matrice de polyuréthanne chargée, et
c) récupération des valeurs or et/ou argent par élution de la matrice de polyuréthanne.

2. Procédé selon la revendication 1, dans lequel l'alcool, qui est sensiblement insoluble dans ladite solution de lixiviation est choisi parmi le groupe consistant en le n-pentanol, le n-hexanol, le 2-éthylhexanol, l'isodécanol, le dodécanol, le tridécanol, l'hexadécanol, l'octadécanol, des phénols comme l'heptylphénol, l'octylphénol, le nonylphénol et le dodécylphénol, de préférence le n-pentanol et le tridécanol.

3. Procédé selon la revendication 1 ou 2, dans lequel l'alcool, qui est sensiblement insoluble dans ladite solution de lixiviation est un alcool non aromatique.

4. Procédé selon l'une quelconque des revendications 1 à 3, dans lequel la quantité d'alcool par rapport à la résine échangeuse d'ion se situe dans l'intervalle allant de 10% à 300% en poids de la résine échangeuse d'ions.

5. Procédé selon l'une quelconque des revendications 1 à 4, dans lequel la matrice de polyuréthanne est choisie parmi la mousse de polyuréthanne expansée et la mousse de polyuréthanne réticulée.

6. Procédé selon l'une quelconque des revendications 1 à 5, dans lequel la fonctionnalité amine est fournie par un deuxième polymère polymérisé sur les surfaces externes et/ou internes de la matrice polyuréthanne.

7. Procédé selon l'une quelconque des revendications 1 à 6, dans lequel le deuxième polymère est choisi parmi un polystyrène-divinylbenzène ayant une fonctionnalité amine ensuite insérée sur le deuxième polymère et le polyacrylonitrile ayant une fonctionnalité amine ensuite insérée sur le deuxième polymère.

8. Procédé selon l'une quelconque des revendications 1 à 7, dans lequel le deuxième polymère est une résine époxy, qui est dissoute dans un solvant approprié et mélangée à des amines aliphatiques comme la DETA (diéthylènetriamine), la TETA (triéthylènetétramine), la poly(oxyéthylènetriamine) et interpénétrée dans la matrice de polyuréthanne et durcie.

9. Procédé selon l'une quelconque des revendications 1 à 8, dans lequel un extractant organique est imprégné dans la matrice de polyuréthanne.

10. Procédé selon la revendication 9, dans lequel l'extractant organique contient une fonctionnalité amine et est choisi dans le groupe consistant en la trioctylamine, les guanidines, le chlorure de tri(alkyl en C₈₋₁₀) méthylammonium, le chlorure de triméthylhexadécylammonium, les oxydes de phosphine, les sulfones, les sulfoxydes, le phosphate de tri(2-éthylhexyle), le phosphate de tributyle et le butylphosphonate de dibutyle, de préférence le chlorure de triméthylhexadécylammonium.

11. Procédé selon l'une quelconque des revendications 1 à 10, dans lequel l'extractant organique est mélangé à un solvant hydrocarboné non miscible dans l'eau.

12. Procédé d'extraction de thiosulfates d'or et/ou d'argent à partir d'une solution comprenant les étapes de :
a) mise en contact d'une solution de lixiviation contenant le thiosulfate d'or et/ou le thiosulfate d'argent avec une résine échangeuse d'ion avec une fonctionnalité amine, en la présence d'un alcool, ledit alcool étant sensiblement insoluble dans ladite solution de lixiviation, pour charger ladite résine échangeuse d'ions du thiosulfate d'or et/ou du thiosulfate d'argent ;
b) séparation de la résine échangeuse d'ions chargée, et
c) récupération des valeurs or et/ou argent sorbées par élution de la résine échangeuse d'ions.

13. Procédé selon la revendication 12, dans lequel l'alcool, qui est sensiblement insoluble dans ladite solution de lixiviation est choisi parmi le groupe consistant en le n-pentanol, le n-hexanol, le 2-éthylhexanol, l'isodécanol, le dodécanol, le tridécanol, l'hexadécanol, l'octadécanol, des phénols comme l'heptylphénol, l'octylphénol, le nonylphénol et le dodécylphénol, de préférence le n-pentanol et le tridécanol.

14. Procédé selon la revendication 12 ou 13, dans lequel l'alcool, qui est sensiblement insoluble dans ladite solution de lixiviation est un alcool non aromatique.

15. Procédé selon l'une quelconque des revendications 12 à 14, dans lequel la quantité d'alcool par rapport à la résine échangeuse d'ion se site de préférence, dans l'intervalle allant de 10% à 300% en poids de la résine échangeuse d'ions.

16. Procédé selon l'une quelconque des revendications 12 à 15, dans lequel un extractant organique est imprégné dans la résine échangeuse d'ions.

17. Procédé selon la revendication 16, dans lequel l'extractant organique contient une fonctionnalité amine et est choisi dans le groupe consistant en la trioctylamine, les guanidines, le chlorure de tri(alkyl en C₈₋₁₀)méthylammonium, le chlorure de triméthylhexadécylammonium, les oxydes de phosphine, les sulfones, les sulfoxydes, le phosphate de tri(2-éthylhexyle), le phosphate de tributyle et le butylphosphonate de dibutyle, de préférence le chlorure de triméthylhexadécylammonium.

18. Procédé selon l'une quelconque des revendications 16 ou 17, dans lequel l'extractant organique est mélangé à un solvant hydrocarboné non miscible dans l'eau.

19. Procédé selon l'une quelconque des revendications 12 à 18, dans lequel la résine échangeuse d'ions est une résine échangeuse d'anions ayant une fonctionnalité amine, de préférence une résine base forte consistant en une amine quaternaire attachée à un squelette polymère.

20. Procédé d'extraction de thiosulfates d'or et/ou d'argent à partir d'une solution, comprenant les étapes de :
a) mise en contact d'une solution de lixiviation contenant le thiosulfate d'or et/ou le thiosulfate d'argent avec un mélange extractant liquide, ledit mélange extractant liquide comprenant une extractant organique et un alcool sensiblement insoluble dans l'eau, imprégné ou imbibé dans un support non réactif approprié, ledit mélange extractant liquide étant sensiblement non miscible dans ladite solution de lixiviation, pour charger l'extractant organique du thiosulfate d'or et/ou du thiosulfate d'argent ;
b) séparation du mélange extractant liquide chargé, et
c) récupération des valeurs or et/ou argent du mélange extractant liquide chargé.

21. Procédé selon la revendication 20, dans lequel l'alcool sensiblement insoluble dans l'eau est choisi parmi le groupe consistant en le n-pentanol, le n-hexanol, le 2-éthylhexanol, l'isodécanol, le dodécanol, le tridécanol, l'hexadécanol, l'octadécanol, des phénols comme l'heptylphénol, l'octylphénol, le nonylphénol et le dodécylphénol, de préférence le n-pentanol et le tridécanol.

22. Procédé selon la revendication 20 ou 21, dans lequel l'alcool sensiblement insoluble dans l'eau est un alcool non aromatique.

23. Procédé selon l'une quelconque des revendications 20 à 22, dans lequel le rapport molaire de l'extractant organique à l'alcool insoluble dans l'eau se situe dans l'intervalle allant de 1:100 à 100:1 et de préférence, le rapport molaire de l'extractant organique à l'alcool insoluble dans l'eau est de 1:3.

24. Procédé selon l'une quelconque des revendications 20 à 23, dans lequel le support non réactif est choisi parmi le groupe consistant en le carbone activé, un polymère sous la forme d'un polystyrène-divinylbenzène macroréticulaire, un acrylate, un poly(alcool vinylique), un poly(chlorure de vinyle), un polyuréthanne, une cire (y compris, une cire paraffine, la cire d'abeille), qui est insoluble dans l'alcool insoluble dans l'eau.

25. Procédé selon l'une quelconque des revendications 20 à 24, dans lequel le support non réactif est sous forme de perles particulaires et contient un grand volume de vide interne.

26. Procédé selon l'une quelconque des revendications 20 à 25, dans lequel l'extractant organique est imprégné dans la résine échangeuse d'ions.

27. Procédé selon la revendication 26, dans lequel l'extractant organique contient une fonctionnalité amine et est choisi dans le groupe consistant en la trioctylamine, les guanidines, le chlorure de tri(alkyl en C₈₋₁₀)méthylammonium, le chlorure de triméthylhexadécylammonium, les oxydes de phosphine, les sulfones, les sulfoxydes, le phosphate de tri(2-éthylhexyle). le phosphate de tributyle et le butylphosphonate de dibutyle, de préférence le chlorure de triméthylhexadécylammonium.

28. Procédé selon l'une quelconque des revendications 26 ou 27, dans lequel l'extractant organique est mélangé à un solvant hydrocarboné non miscible dans l'eau.

29. Procédé selon l'une quelconque des revendications 1 à 28, dans lequel la solution de thiosulfate d'or et/ou d'argent est maintenue à un pH alcalin.
